# EUROPEAN PATENT SPECIFICATION

(11) **EP 0 384 405 B1**
(45) Date of publication and mention of the grant of the patent: **03.05.1995**
(21) Application number: 90103256.5
(22) Date of filing: 20.02.1990
(51) Int. Cl.: G11B 7/00, G11B 20/10

(54) **Optical recording and reproducing apparatus**
Optisches Aufzeichnungs- und Wiedergabegerät
Appareil d'enregistrement et de reproduction optique

(30) Priority: 22.02.1989 JP 42868/89; 23.02.1989 JP 44022/89
(43) Date of publication of application: 29.08.1990
(73) Proprietor: OMRON CORPORATION, Kyoto 616 (JP)
(72) Inventor: Tstsui, Keiichi, c/o Omron Corporation, Shimokaiinji, Nagaokakyo-shi, Kyoto 617 (JP); Yoda, Shigeru, c/o Omron Corporation, Shimokaiinji, Nagaokakyo-shi, Kyoto 617 (JP); Sogou, Kouji, c/o Omron Corporation, Shimokaiinji, Nagaokakyo-shi, Kyoto 617 (JP)
(74) Representative: WILHELMS, KILIAN & PARTNER Patentanwälte

(56) References cited:
- EP-A- 0 098 349
- EP-A- 0 276 326
- PATENT ABSTRACTS OF JAPAN vol. 11, no. 366 (P-641) 28 November 1987,& JP-A-62 139179 (CSK CORP.) 22 June 1987,
- PATENT ABSTRACTS OF JAPAN vol. 12, no. 388 (P-771) 17 October 1988,
- PATENT ABSTRACTS OF JAPAN vol. 11, no. 194 (P-588) 23 June 1987,& JP-A-62 018676 (CANON INC) 27 January 1987,
- PATENT ABSTRACTS OF JAPAN vol. 12, no. 363 (P-764) 29 September 1988,& JP-A-63 113873 (SONY CORP) 18 May 1988,
- PATENT ABSTRACTS OF JAPAN vol. 11, no. 15 (P-536) 16 January 1987,& JP-A-61 188743 (NEC CORP) 22 August 1986,
- PATENT ABSTRACTS OF JAPAN vol. 12, no. 271 (P-736) 28 July 1988,& JP-A-63 052393 (TOSHIBA CORP) 05 March 1988,

## Description

The present invention relates generally to an optical recording (writing) and reproducing (reading or playing back) apparatus for forming pits on an optical recording medium depending on given data to be recorded using a light spot projected from a recording light projection optical system including a semiconductor laser to record the data on the optical recording medium, illuminating the optical recording medium using a light spot projected from a reproducing light projection optical system and converting reflected light from the optical recording medium into an electrical signal through a reproducing light reception optical system including a light receiving element to read data represented by the pits, and more particularly, to a recording and reproducing apparatus of a WORM (write once, read many) type for newly forming pits representing data in an unrecorded region subsequent to the recorded pits on the optical recording medium to additionaly record the data.

### Description of the Prior Art

A format shown in Fig. la has been known as a format (continuous WORM type format) for recording data in pit form on a track of a card-shaped optical recording medium used in this type of optical recording and reproducing apparatus.

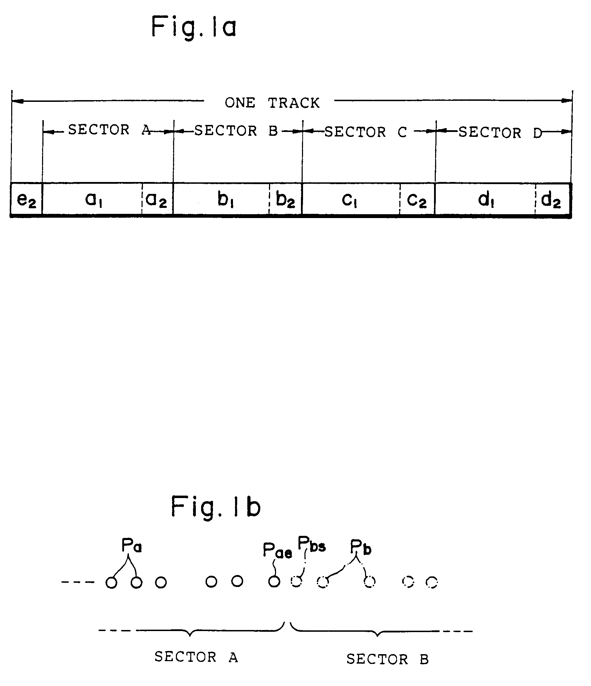

In the continuous WORM type format shown in Fig. 1a, one track of an optical recording medium includes a plurality of sectors A, B, C and D. The sectors A to D are contiguous to each other. The sectors A to D respectively comprise data portions a₁ to d₁ in which data are recorded and sector information portions a₂ to d₂ in which information regarding the sectors are recorded. A portion e₂ in the lead is a track information portion. In the continuous WORM type format, no space indicating the boundary between the contiguous sectors exists between the sectors. For example, as shown in Fig. 1b, the first pit P_{bs} out of pits P_{b} in the succeeding sector B is additionally recorded (additionally formed) subsequently to the last pit Pₐₑ out of pits Pₐ recorded (formed) in the preceding sector A.

In order to properly establish synchronization in continuously reproducing the pits in the sectors A and B, when data is additionaly recorded in the sector B subsequently to the sector A, the first pit P_{bs} in the sector B must be recorded in a position which is synchronous with the position of the last pit Pₐₑ in the sector A. The sector information portion a₂ exists in the rear end of the sector A, as described above. Pits indicating a mark or pattern representing the end of the sector (referred to as sector end pattern hereinafter) are formed in this sector information portion a₂. The recording and reproducing apparatus must comprise means for properly reading such a sector end pattern and forming the first pit P_{bs} to be recorded in the sector B in a position which is properly synchronous with the position of the last pit Pₐₑ in the sector A.

An optical recording and reproducing apparatus using, in recording, reference clocks for synchronization established on the basis of the detection of pits formed on the track of a recording medium is known from EP-A-0 276 326.

JP-A-63113873 discloses a disk recording information copying device and is also concerned with the synchronization problem in copying data of unknown recording format to a different recording medium.

An object of the present invention is to provide an optical recording and reproducing apparatus comprising a recording circuit capable of recording, in a position which is properly synchronous with the position of the last pit in a sector on which recording was made, the first pit in a sector on which recording is to be subsequently made.

Another object of the present invention is to make it possible to properly record, even if it is impossible to detect the last pit in a sector on which recording was made due to defects such as flaws on a track of a recording medium, the first pit in a sector on which recording is to be subsequently made.

A further object of the present invention is to make it possible to record a pit to be recorded subsequently to a pit already recorded in a recording medium such that the amount of the shift in position of the pit to be recorded is not rapidly changed relative to the amount of the shift in position of the recorded pit.

The invention is as defined in claim 1.

In the above described construction, the data demodulating means generates the synchronizing signal in synchronization with the pit detection signal generated in response to the detection of the recorded pit. The time width generating means outputs the time width signal associated with the cycle of the synchronizing signal applied from the data demodulating means. The recording timing signal generating means generates and outputs the recording timing signals after a time delay corresponding to the time width signal applied from the time width generating means from the time point where the last recorded pit was detected.

The recorded pit has been recorded in the recording medium with the position thereof being shifted from the regular position where the pit is to be recorded due to the feed speed fluctuation of the recording medium in a case where the recorded pit had been recorded. On the other hand, even if the feed speed fluctuation of the recording medium in a case where a pit to be additionally recorded is recorded differs in phase from the feed speed fluctuation of the recording medium in a case where the recorded pit had been recorded, the cycle of the synchronizing signal corresponds to the feed speed fluctuation in a case where the recorded pit had been recorded. Accordingly, the next pit can be additionally recorded in response to the recording timing signals generated at timing corresponding to the time width signal having the time width associated with the cycle of the synchronizing signal. Consequently, the pit to be additionally recorded will be recorded on the recording medium such that the amounts of the shift in position of the pit to be recorded and the recorded pit are continuous. Therefore, both the pits can be accurately reproduced at the time of reproduction.

The foregoing and other objects, features, aspects and advantages of the present invention will become more apparent from the following detailed description of the present invention when taken in conjunction with the accompanying drawings, in which :
Figs. 1a and 1b are diagrams showing a format of a continuous WORM type;
Fig. 2 is a diagram showing the construction of an optical system in an optical recording and reproducing apparatus;
Fig. 3 is a block diagram showing an internal circuit in the optical recording and reproducing apparatus shown in Fig. 2;
Fig. 4 is a timing chart for explaining an operation of the optical recording and reproducing apparatus shown in Fig. 2;
Fig. 5 is a block diagram showing an example of a synchronizing signal separating circuit in the optical recording and reproducing apparatus shown in Fig. 2;
Fig. 6 is a block diagram showing an internal circuit in an optical recording and reproducing apparatus in a modified example;
Fig. 7 is a timing chart for explaining an operation of the optical recording and reproducing apparatus shown in Fig. 6;
Figs. 8a, 8b and 8c are diagrams respectively showing a sector, a state where the feed speed of a recording medium in the sector fluctuates, and a state where the position of a pit is shifted due to the fluctuation in feed speed;
Fig. 9 is a diagram showing a state where the amounts of the shift in position of pits are rapidly changed in the boundary between two sectors;
Fig. 10 is a block diagram showing an internal circuit in an optical recording and reproducing apparatus according to an embodiment of the present invention;
Fig. 11 is a timing chart for explaining an operation of the optical recording and reproducing apparatus shown in Fig. 10; and
Fig. 12 is a diagram showing a state where the amounts of the shift in position of pits are continuously changed in the boundary between two sectors in the optical recording and reproducing apparatus shown in Fig. 10.

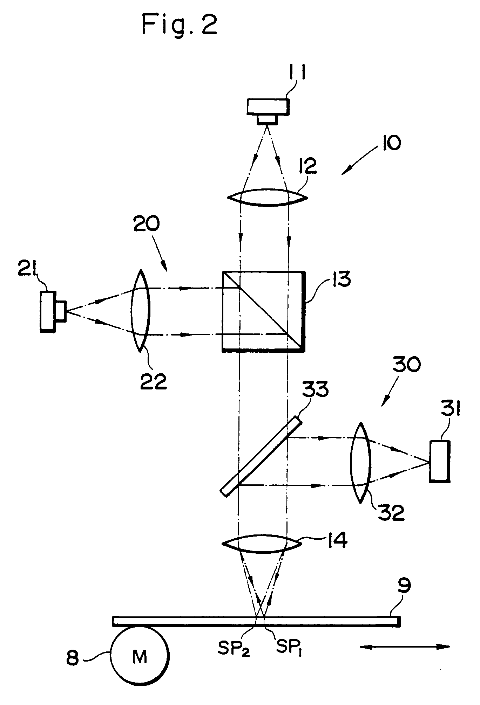

Fig. 2 is a diagram showing the construction of a recording and reproducing optical system in an optical recording and reproducing apparatus. An optical card 9 is illustrated as an example of an optical recording medium.

The optical card 9 is conveyed back and forth in its longitudinal direction (the direction of its track) by a card conveying mechanism (not shown) having a motor 8 as a driving source. In the process of conveying the optical card 9, information (data) is recorded on the optical card 9 or information (data) recorded in pit form on the optical card 9 is read.

The recording and reproducing optical system comprises a recording light projection optical system 10 for projecting a recording light spot SP1 on the track of the optical card 9, a reproducing light projection optical system 20 for projecting a reproducing light spot SP₂ on the track of the optical card 9, and a reproducing light reception optical system 30 for receiving reflected light of the reproducing light spot SP₂ from the optical card 9 to reproduce data represented by pits formed on the track of the optical card 9.

The recording light projection optical system 10 uses a semiconductor laser 11 as a light source. Light emitted from this semiconductor laser 11 is formed into parallel light by a collimating lens 12. This parallel light is passed through a beam splitter 13 and a half mirror 33 and is focused on the track of the optical card 9 by an objective lens 14, to form a recording light spot SP₁ having a diameter of approximately 1 »m. This recording light spot SP₁ is projected on the track of the optical card 9. Accordingly, a thermally irreversible change of the optical card 9 occurs in the position where the light spot SP₁ is projected, thereby forming pits. The semiconductor laser 11 is driven by pulse signal.

The index of reflection of a portion where the pits are formed is lower than that around the portion. Consequently, the presence or absence of pits can be detected, that is, data can be read on the basis of the reflected light from the optical card 9, as described later.

The reproducing light projection optical system 20 uses a light emitting diode 21 as a light source. Light emitted from this light emitting diode 21 is formed into parallel light by a collimating lens 22. This parallel light is reflected by the beam splitter 13 and passed through the half mirror 33 and is focused on the track of the optical card 9 by the objective lens 14, to from a reproducing light spot SP₂ having a diameter of several to several tens »m. This reproducing light spot SP₂ is formed in a position slightly behind the recording light spot SP₁ in the direction of conveyance of the optical card 9 in the recording mode. Consequently, data can be reproduced using the reproducing light spot SP₂ immediately after it was recorded using the recording light spot SP₁, to check the recording.

The reproducing light reception optical system 30 is adapted to reflect the reflected light of the reproducing light spot SP₂ from the optical card 9 by the half mirror 33 through the objective lens 14, converge the light by a converging lens 32, and receive the light by a photodiode 31. The presence or absence of pits and the contents of data corresponding to the pits can be judged on the basis of such a light reception signal.

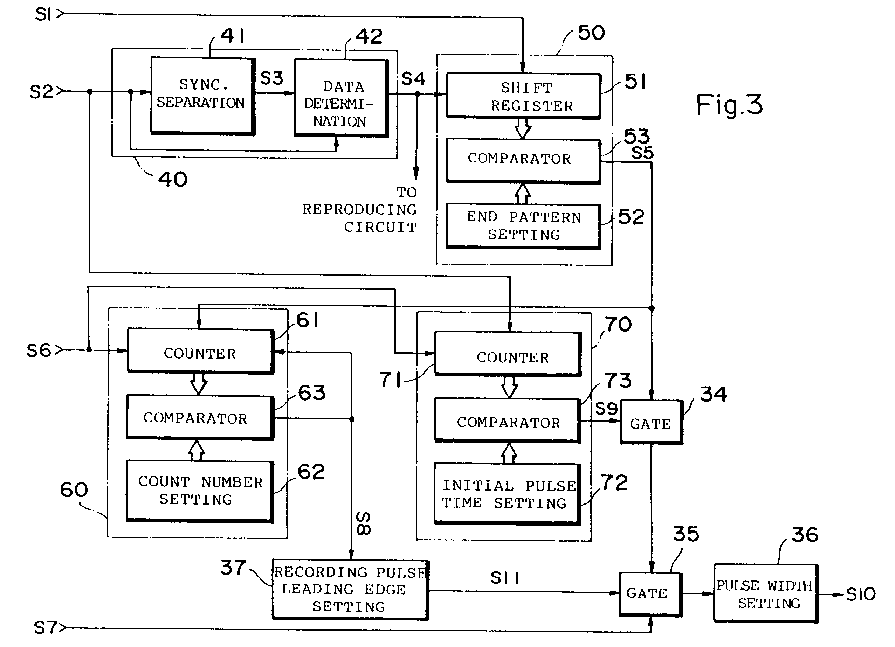

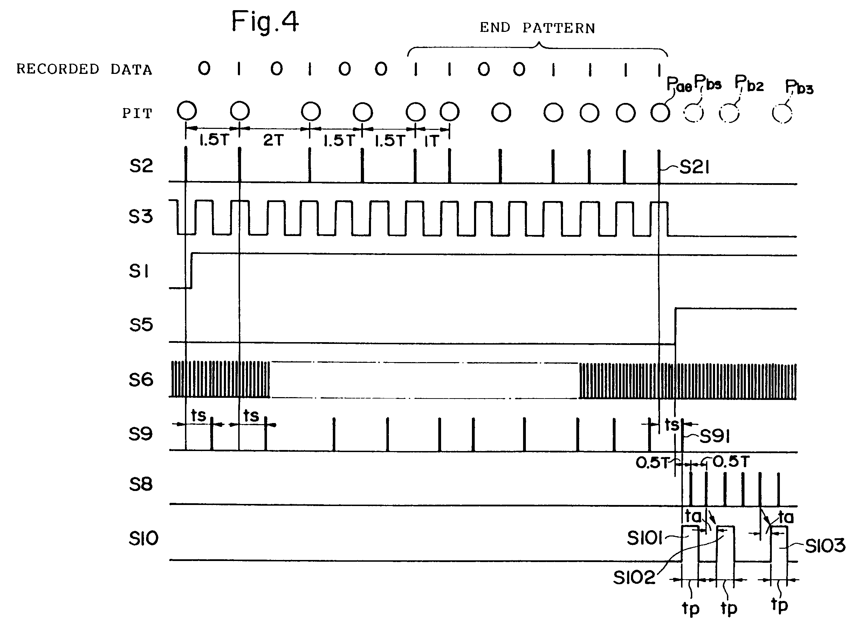

Fig. 3 is a circuit diagram illustrating a recording circuit (a part thereof is also served as a reproducing circuit) provided in the optical recording and reproducing apparatus and Fig. 4 is a timing chart for explaining an operation of the circuit.

This recording circuit will be described with reference to Figs. 3 and 4. For simplicity, Figs. 3 and 4 do not illustrate means for outputting data to be recorded in pit form onto a track of an optical card, means for outputting a detection command signal of an end pattern of a sector, and means for outputting high-frequency clock pulses in operation.

A circle represented by a solid line in Fig. 4 indicates a pit already recorded on the optical card in the MFM modulation method, for example, a pit in a sector A. On the other hand, a circle represented by a chain line indicates a pit to be recorded in a sector B subsequent to the sector A. MFM modulation is abbreviated from "modified frequency modulation". In this recording circuit, the intervals between pits are of three types; 1T, 1.5 T and 2T, where T denotes a predetermined unit length. Data 1 or 0 is represented by the three types of pit intervals.

Consider a case where an end pattern of the sector A of the optical card is detected and subsequently, data is recorded in the sector B.

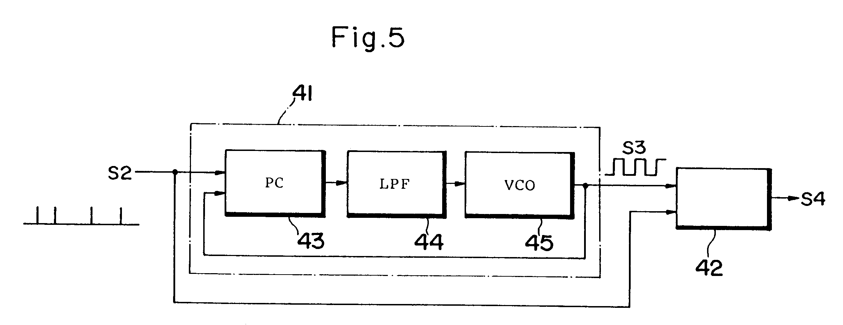

Pits in the sector A are scanned by the reproducing light reception optical system 30. An output signal of the photodiode 31 is subjected to waveform shaping, to be applied to a data demodulating circuit 40 as a pit detection signal S2. Consequently, a synchronizing signal S3 is outputted from a synchronizing signal separating circuit 41 in the data demodulating circuit 40. The synchronizing signal separating circuit 41 is constituted by a PLL (phase-locked loop) comprising a phase comparing circuit 43, a low-pass filter 44 and a voltage controlled oscillator 45, as shown in Fig. 5. The synchronizing signal S3 is applied to a data determining circuit 42 in the data demodulating circuit 40. When the synchronizing signal S3 is at a high level, this data determining circuit 42 determines that data is "1" if the pit detection signal S2 is inputted, while determining that data is "0" if the pit detection signal S2 is not inputted, and outputs the results of the determination to an end pattern detecting circuit 50 as a data signal S4. When an end pattern detection command siganl S1 rises to a high level, the data signal S4 is serially inputted to a shift register 51 in the end pattern detecting circuit 50.

This end pattern detecting circuit 50 comprises an end pattern setting circuit 52 in which an end pattern (in the present embodiment, data "11001111") is previously set, and a comparing circuit 53 for comparing an end pattern (an end pattern to be compared) included in the data signal S4 inputted to the shift register 51 with the end pattern (the set end pattern) set in the end pattern setting circuit 52 to output an end pattern detection signal S5 if both the end patterns coincide with each other.

A reference clock signal generating circuit 60 is used for outputting reference clock pulses S8 having a period corresponding to a writing reference interval 0.5T for recording data in pit form by MFM modulation in synchronization with a pit already recorded (recorded pit). This reference clock signal generating circuit 60 comprises a counter 61 responsive to the input of the end pattern detection signal S5 for starting a counting operation to count high-frequency clock pulses S6 applied thereto, a predetermined count number setting circuit 62 in which a predetermined count number is previously set, and a comparing circuit 63 for comparing a count number (real count number) in the counter 61 with the predetermined count number in the predetermined count number setting circuit 62 to output a reference clock pulse S8 when both the count numbers coincide with each other. The above described predetermined count number is set such that the reference clock pulses S8 are outputted every time the optical card is sent at reference intervals of 0.5T according to the feed speed of the optical card. The counter 61 is adapted to be reset by the application of the reference clock pulses S8 to start a counting operation from zero again.

The reference clock pulses S8 are applied to a recording pulse leading edge setting circuit 37. This recording pulse leading edge setting circuit 37 is used for determining the time point (timing) of the leading edges of the recording pulses S10 (the second recording pulse S102 and the subsequent pulses in Fig. 4) for driving a semiconductor laser so as to write pits. More specifically, this recording pulse S10 rises after a delay of a predetermined time ta from the corresponding reference clock pulse S8. This delay time ta is set in the recording pulse leading edge setting circuit 37. This circuit 37 outputs pulse signals S11 after the delay time ta from the reference clock pulses S8 in response to the input of the pulses S8.

An initial pulse leading edge timing generating circuit 70 generates an initial pulse leading edge signal S91 for determining the timing of the leading edge of an initial recording pulse S101 for additionally recording, that is, a recording pulse S101 used for recording a pit P_{bs} in the sector B to be positioned subsequently to the last pit Pₐₑ in the end pattern of the sector A. Therefore, this generating circuit 70 comprises a counter 71 which is reset in response to the pit detection signal S2 and thus, starts counting of the high-frequency clock pulses S6, an initial pulse time setting circuit 72 in which a count number corresponding to a time ts from the input of the pit detection signal S2 to the leading edge of the initial pulse is previously set, and a comparing circuit 73 for comparing a count number in the counter 71 with the count number set in the initial pulse time setting circuit 72 and outputting an initial pulse leading edge signal S9 when both the count numbers coincide with each other.

When the end pattern detection signal S5 is outputted from the end pattern detecting circuit 50, a gate circuit 34 is enabled. Consequently, the initial pulse leading edge signal S91 generated on the basis of a signal S21, which corresponds to the last pit Pₐₑ, in the pit detection signal S2 is applied to a pulse width setting circuit 36 through gate circuits 34 and 35. The pulse width setting circuit 36 is used for specifying a pulse width tp of the recording pulses S10. In addition, the gate circuit 35 is controlled by a signal S7 representing data to be recorded. Thus, the initial recording pulse S101 to be applied to the semiconductor laser 11 is outputted from the pulse width setting circuit 36 so as to form the first pit P_{bs} to be recorded in the sector B.

With regard to the second and subsequent pits P_{b2}, P_{b3} and the like, the pulse signal S11 outputted from the recording pulse leading edge setting circuit 37 is fed to the pulse width setting circuit 36 through the gate circuit 35 controlled by the signal S7 representing data to be recorded. Accordingly, the recording pulses S102 and S103 to be applied to the semiconductor laser 11 are outputted from the pulse width setting circuit 36 so as to form the pits P_{b2}, P_{b3} and the like.

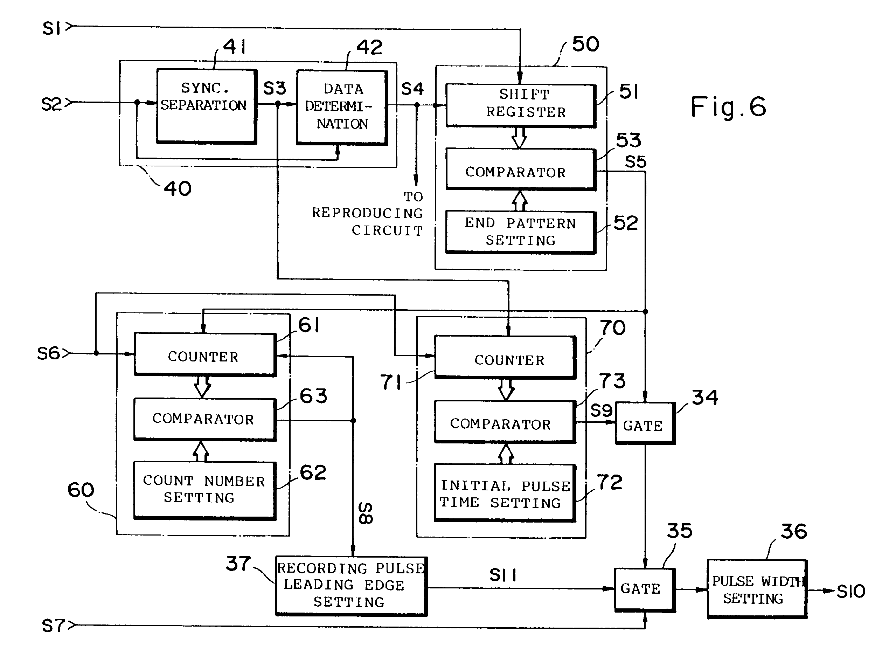

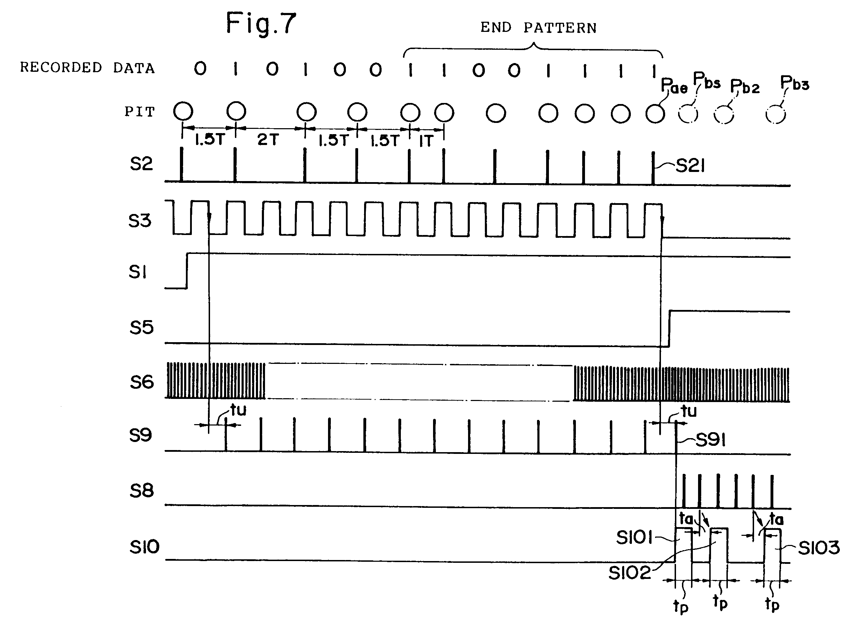

Figs. 6 and 7 show a modified example. In Figs. 6 and 7, the same reference numerals are assigned to the same portions as those shown in Figs. 3 and 4 and hence, the description thereof is not repeated. Description is now made of the modified example with emphasis on different construction from that in the embodiment shown in Figs. 3 and 4.

In the embodiment shown in Figs. 3 and 4, the pit detection signal S2 is applied to the counter 71 in the initial pulse leading edge timing generating circuit 70 as a counting start signal. On the other hand, in this modified example, a synchronizing signal S3 outputted from a synchronizing signal separating circuit 41 in a data demodulating circuit 40 is applied to a counter 71 as a counting start signal. As obvious from Fig. 7, the counter 71 starts counting of high-frequency clock pulses S6 at the trailing edge of the synchronizing signal S3. A set time tu set in an initial pulse time setting circuit 72 naturally differs from the time ts in the above described embodiment.

According to a recording circuit in this modified example, even in a case where pits are not correctly reproduced due to flaws and defects on a track of an optical card and thus, the pit detection signal S2 is not applied to the data demodulating circuit 40, a PLL constituting the synchronizing signal separating circuit 41 in the data demodulating circuit 40 outputs the synchronizing signal S3 with the cycle of the previous synchronizing signal S3 being held without any modification even if there are approximately one to two or few pits missing in the pit detection signal S2. Consequently, an initial pulse S91 can be correctly generated and the first pit P_{bs} in the next sector B can be additionally recorded in a right position by controlling the start of counting of the counter 71 in an initial pulse leading edge timing generating circuit 70 on the basis of the synchronizing signal S3.

The data demodulating circuit 40 in the recording circuit according to the embodiment shown in Fig. 3 or 6 will be described in more detail. This data demodulating circuit 40 is also served as a reproducing circuit and is used for demodulating data comprising a combination of "1" and "0" recorded on the track of the optical card in pit form using MFM modulation on the basis of the pit detection signal S2 inputted thereto. The synchronizing signal separating circuit 41 in this data demodulating circuit 40 is constituted by the PLL as shown in Fig. 5, as described above.

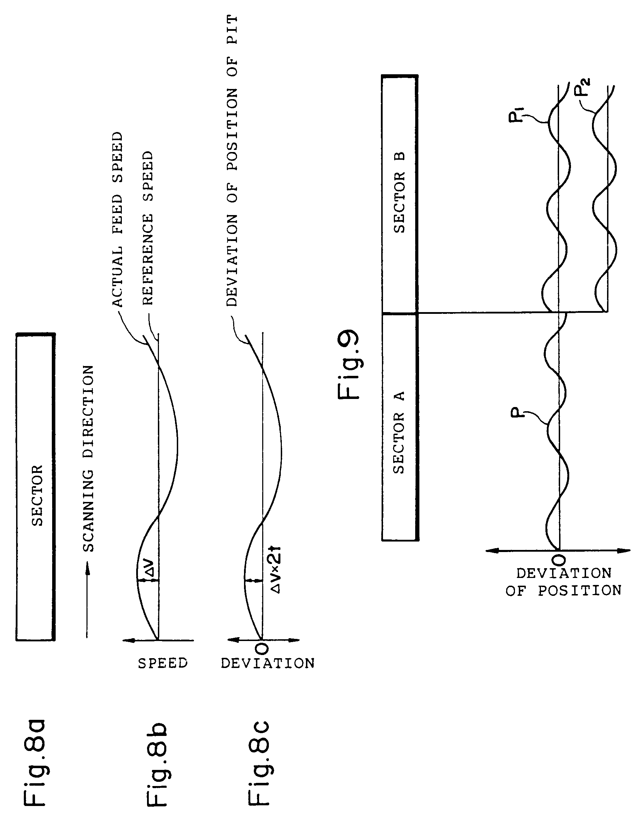

In scanning for recording in one sector shown in Fig. 8a, if there is a fluctuation (deviation Δv) in feed speed of the optical card relative to a reference speed v, as shown in Fig. 8b, due to the effect of nonuniformity in rotation of a motor 8 used for feeding the optical card, the position of a pit to be recorded is shifted or deviated by Δv · 2t (with respect to data represented by an interval between two pits of 1T) from its regular position, as shown in Fig. 8c, according to the fluctuation in feed speed. As a result, fluctuations in time corresponding to the change in speed occur in the pit detection signal S2 applied to the data demodulating circuit 40 when the pit thus shifted in position is detected. Let the period of reference clock pulses S8 be t (= 0.5T). If the deviation in speed is Δv with respect to data represented by an interval between pits of 1T (= 2t), the interval between pits is shifted by Δv · 2t from its regular interval.

The frequency of such fluctuations in time of the pit detection signal S2 is generally low, for example, approximately several 10Hz. Accordingly, the PLL can considerably follow the frequency. Consequently, data in the above sector can be accurately reproduced without providing asynchronization of the synchronizing signal S3 from the pit detection signal S2. In addition, even if there are one to two pits missing in the pit detection signal S2 due to flaws, dust and defects on the track of the recording medium, data can be also reproduced without interfering with a following operation of the PLL.

However, the following capability of the PLL has limits in two respects, that is, the frequency of the fluctuations and the amplitude thereof. The synchronizing signal S3 is asynchronous with the pit detection signal s2 if the limits are exceeded. The asynchronization makes it impossible to determine data in a data determining circuit 42. As a result, data is erroneously read. That is, data cannot be correctly reproduced.

An example in which it becomes impossible to reproduce data will be described with reference to Fig. 9. In the upper row of Fig. 9, a sector A in which pits have been already recorded and a sector B in which new pits are to be additionally recorded subsequently to the pits in this sector A are shown. In general, pits are not recorded in a plurality of sectors in a single track, such as the sectors A and B, in one reciprocating operation of the optical card. When pits are recorded in the sector A, it is assumed that the position of the pits recorded in the sector A are shifted from their regular positions due to the nonuniformity in rotation of the motor, as represented by P in the lower row of Fig. 9. In this state, when pits are to be additionally recorded in the sector B, it is assumed that the shift in position as represented by P₁ or P₂ occurs in the pits to be recorded in the sector B due to the nonuniformity in rotation of the motor. The shift in position P₁ occurs when the average feed speed of the optical card at the time of recording the pits in the sector B is approximately the same as that at the time of recording the pits in the sector A, while the shift in position p₂ occurs when the average feed speed at the time of recording the pits in the sector B is lower than that at the time of recording the pits in the sector A. Such a shift in position P₁ or P₂ of the pits recorded in the sector B does not coincide in phase with the shift in position of the pits recorded in the sector A. Consequently, the amounts of the shift in position of the pits are rapidly changed in the boundary between the sectors A and B.

When the pits in both the sectors A ans B in such a recorded state are continuously reproduced by the data demodulating circuit 40 in the reproduction mode, the PLL in the data demodulating circuit 40 cannot follow a rapid change in the amounts of the shift in position of the pits in the boundary between the sectors A and B. Accordingly, data is erroneously read.

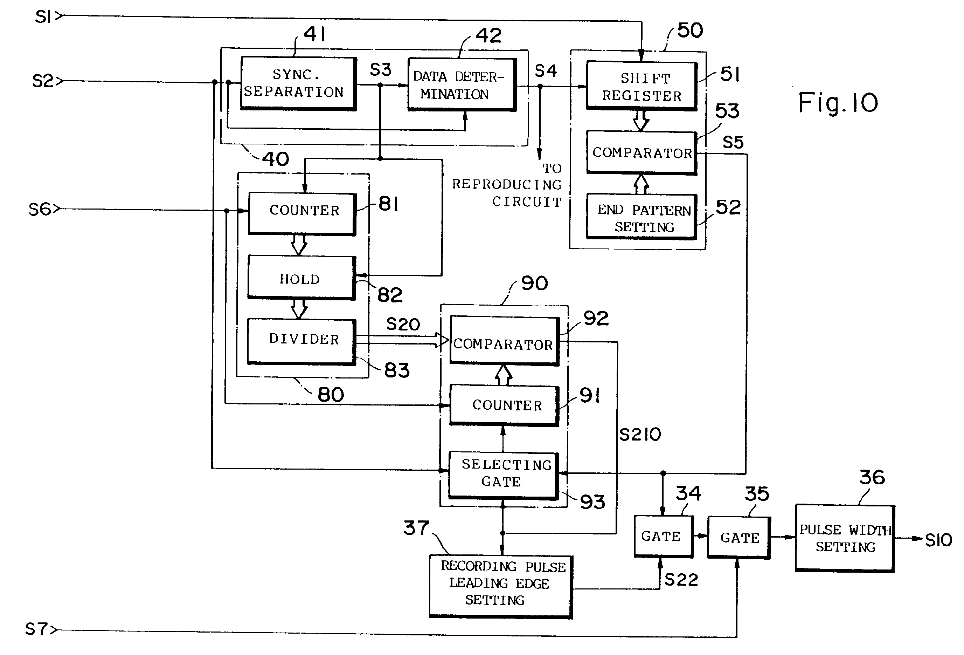

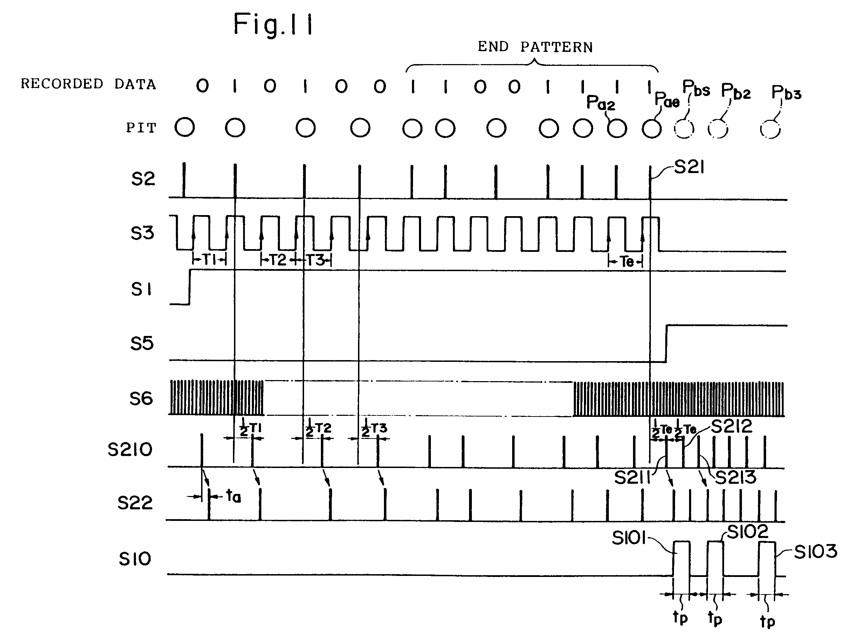

An embodiment of an optical recording and reproducing apparatus according to an embodiment of the invention and capable of preventing the occurrence of the above described problems will be described with reference to Figs. 10 and 11. In Figs. 10 and 11, the same reference numerals are assigned to the portions already described and hence, the description thereof is not repeated.

Description is now made of the embodiment shown in Fig. 10 with emphasis on different construction from that in the embodiment shown in Fig. 3.

A recording circuit according to the present embodiment comprises a time width generating circuit 80 and a recording timing signal generating circuit 90 in place of the reference clock generating circuit 60 and the initial pulse leading edge timing generating circuit 70 in the embodiment shown in Fig. 3.

This time width generating circuit 80 is responsive to a synchronizing signal S3 from a synchronizing signal separating circuit 41 in a data demodulating circuit 40 for generating a time width signal S20 representing the time width which is one-half of the period of the synchronizing signal S3 and comprises a counter 81, which is reset on the leading edge of the synchronizing signal S3 to start counting, for counting high-frequency clock pulses S6 inputted in the time period elapsed until it is reset again on the leading edge of the next synchronizing signal S3 to measure the cycle T1, T2, T3, , Te of each of the synchronizing signals S3, a count number holding circuit 82 for latching a count number in the counter 81 on the leading edge of the synchronizing signal S3 to hold the same and adapted to update the contents held on the leading edge of the next synchronizing signal S3, and a divider 83 for decreasing the count number held in the count number holding circuit 82 by one-half to output the same as a time width signal S20.

The recording timing signal generating circuit 90 comprises a comparing circuit 92 for comparing the time width signal S20 from the divider 83 with a count number signal from a counter 91 as described below to output a recording timing signal 210 when both the signals coincide with each other, a counter 91 for counting the high-frequency clock pulses S6 to output a count number signal to the comparing circuit 92, and a selecting gate 93 for applying a pit detection signal S2 to the counter 91 as a first reset signal and applying the recording timing signal S210 of the comparing circuit 92 to the counter 91 as a second reset signal after an end pattern detection signal S5 is applied from an end pattern detecting circuit 50.

Description is now made of an operation of main portions of a recording circuit according to the present embodiment. The synchronizing signal S3 is inputed to the counter 81 in the time width setting circuit 80 from the synchronizing signal separating circuit 41 in the data demodulating circuit 40 in response to the input of the pit detection signal S2. The counter 81 is reset on the leading edge of this synchronizing signal S3 to start a counting operation, and counts the high-frequency clock pulses S6 inputted in the time period elapsed until the next synchronizing signal S3 rises. A count number in the counter 81 during one cycle of the synchronizing signal S3 (corresponding to the period T1, T2, ···, Te between the synchronizing signals S3) is held in the count number holding circuit 82. The count number held in the count number holding circuit 82 is decreased by one-half in the divider 83, to be a time width signal S20. The time width signal S20 from this divider 83 is applied to the comparing circuit 92 in the recording timing signal generating circuit 92.

In the recording timing signal generating circuit 90, the counter 91 is reset in response to the pit detection signal S2 applied from the selecting gate 93. This counter 91 starts counting of the high-frequency clock pulses S6 when it is reset. When a count number in the counter 91 corresponds to the time width signal 20, the recording timing signal S210 is outputted from the comparing circuit 92. Consequently, the timing of outputting the recording timing signal S210 is delayed in time from the timing of generating the pit detection signal S2 by one-half of the period T1, T2, ···, Te of the synchronizing signal S3, that is, T1/2, T2/2, ···, Te/2. This recording timing signal S210 is applied to a recording pulse leading edge setting circuit 37. Therefore, a recording pulse leading edge signal S22 is outputted from the recording pulse leading edge setting circuit 37 after a delay time ta of the setting circuit 37 has elapsed since the recording timing signal S210 was outputted. It is signals outputted after the last pit Pₐₑ in an end pattern detected (after the end pattern detection signal S5 attains a high level) that are applied to a pulse width setting circuit 36 through gate circuits 34 and 35 out of recording pulse leading edge signals S22. Accordingly, recording pulses S10 (S101, S102, S103 and the like) are outputted from the pulse width setting circuit 36 after the end pattern is detected, as shown in Fig. 11.

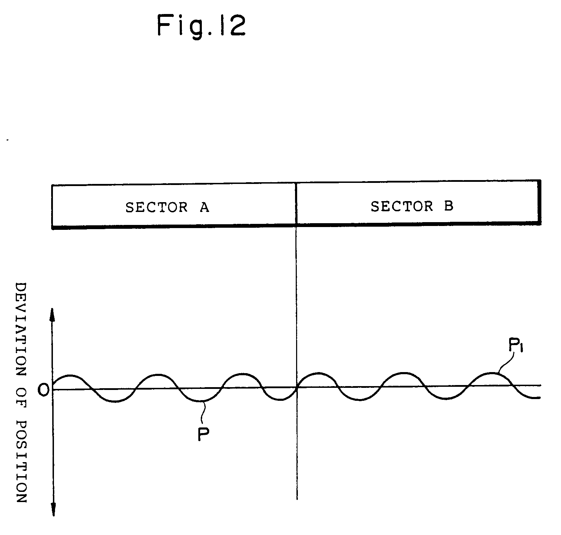

More specifically, in the recording circuit according to the present embodiment, the timing of outputting the recording pulse S101 for recording the first pit P_{bs} in a sector subsequent to the last pit Pₐₑ in the end pattern is specified by the recording timing signal S210 (signal S211) generated at the time point where the time of Te/2 has elapsed from the time point where the last pit Pₐₑ was detected (the time point where the pit detection signal S21 was generated). The period Te used herein is a period between the synchronizing signal S3 corresponding to the detection of the last pit Pₐₑ and the synchronizing signal S3 corresponding to the detection of the preceding pit Pₐ₂. More specifically, the pit P_{bs} to be first additionally recorded in the sector B will be recorded on the optical card by reflecting the amount of the shift in position between the last pit Pₐₑ and the preceding pit Pₐ₂ constituting the end pattern. As a result, the amounts of the shift in position of pits are continuous between the sectors A and B, as represented by, for example, P and P₁ in Fig. 12. At the time of reproduction, data in the sectors A and B can be accurately reproduced in the data demodulating circuit 40.

Recording timing signals S212, S213, ... outputted are generated at intervals of Te/2, after the recording timing signal S211 is outputted when the time of Te/2 has elapsed since the last pit Pₐₑ was detected, because the end pattern detection signal S5 has been already applied to the selecting gate 93 and thus, the counter 91 is reset in response to the recording timing signal S210.

Although the present invention has been described and illustrated in detail, it is clearly understood that the scope of the present invention being limited only by the terms of the appended claims.

## Claims

1. An optical recording and reproducing apparatus comprising a recording circuit which comprises:
data demodulating means (40) for generating a synchronizing signal on the basis of a pit detection signal generated in response to the detection of pits formed on a track of a recording medium and representing recorded data; characterized by
time width generating means (80) for outputting a time width signal corresponding to the time width associated with the period of the synchronizing signal applied from said data demodulating means; and
recording timing signal generating means (90) for generating and outputting recording timing signals at constant time intervals on the basis of the time width signal applied from said time width generating means.

2. The optical recording and reproducing apparatus according to claim 1, which further comprises:
end pattern detecting means (50) for outputting an end pattern detection signal when an end pattern of a sector is detected in the data signal outputted from said data demodulating means; and
gate means (34) responsive to the end pattern detection signal outputted from said end pattern detecting means for allowing the passage of said recording timing signal.

3. The optical recording and reproducing apparatus according to claim 2, which further comprises means (35, 36) for generating a recording pulse for driving a semiconductor laser on the basis of the recording timing signal which passed through said gate means (34) and a signal representing data to be recorded.

4. The optical recording and reproducing apparatus according to claim 2, wherein said recording timing signal generating means (90) is responsive to said end pattern detection signal for generating and outputting recording timing signals at constant time intervals.

## Patentansprüche

1. Optische Aufzeichnungs- und Wiedergabevorrichtung mit einer Aufzeichnungsschaltung, welche
Datendemulationsmittel (40) zur Erzeugung eines Synchronisierungssignals auf der Grundlage eines Pit-Nachweissignals, welches ansprechend auf den Nachweis von auf einer Spur eines Aufzeichnungsmediums ausgebildeten und aufgezeichnete Daten darstellenden Pits erzeugt wird, aufweist, gekennzeichnet durch
Zeitbreitenerzeugungsmittel (80) zur Erzeugung eines Zeitbreitensignals, welches der Zeitbreite entspricht, die der Periode des von den Demulationsmitteln her aufgegebenen Synchronisierungssignals zugeordnet ist, und
Aufzeichnungszeitsignal-Erzeugungsmittel (90) zum Erzeugen und Ausgeben von Aufzeichnungszeitsignalen mit konstanten Zeitintervallen auf der Grundlage des von den Zeitbreitenerzeugungsmitteln her aufgegebenen Zeitbreitensignals.

2. Optische Aufzeichnungs-und Wiedergabevorrichtung nach Anspruch 1, welch ferner
Endmusterfeststellungsmittel (50) zum Ausgeben eines Endmusternachweissignals, wenn ein Endmuster eines Sektors in dem von den Datendemulationsmitteln ausgegebenen Datensignal festgestellt wird, und
Gate-Mittel (34), die auf das von den Endmusterfeststellungsmitteln ausgegebene Endmusterfeststellungssignal ansprechen, zur Gestattung des Durchganges des Aufzeichnungszeitsignals aufweist.

3. Optische Aufzeichnungs-und Wiedergabevorrichtung nach Anspruch 2, welche ferner Mittel (35, 36) zur Erzeugung eines Aufzeichnungsimpulses zur Ansteuerung eines Halbleiter-Lasers auf der Grundlage des Aufzeichnungszeitsignals, welches die Gate-Mittel (34) durchlaufen hat, und eines aufzuzeichnende Daten darstellenden Signals aufweist.

4. Optische Aufzeichnungs-und Wiedergabevorrichtung nach Anspruch 2, bei welcher die Aufzeichnungszeitsignal-Erzeugnungsmittel (90) auf das Endmusternachweissignal für eine Erzeugung und Ausgabe von Aufzeichnungszeitsignalen mit kostanten Zeitintervallen ansprechend sind.

## Revendications

1. Appareil d'enregistrement et de reproduction optique comprenant un circuit d'enregistrement qui comprend:
un moyen de démodulation de données (40) pour générer un signal de synchronisation sur la base d'un signal de détection de cavité généré en réponse à la détection de cavités formées sur la piste d'un support d'enregistrement et représentant des données enregistrées; caractérisé par
un moyen de génération de largeur temporelle (80) pour délivrer en sortie un signal de largeur temporelle correspondant à la largeur temporelle associée à la période du signal de synchronisation appliqué par ledit moyen de démodulation; et
un moyen de génération de signal de minutage d'enregistrement (90) pour générer et délivrer en sortie des signaux de minutage d'enregistrement, à des intervalles de temps constants, sur la base du signal de largeur temporelle appliqué par ledit moyen de génération de largeur temporelle.

2. Appareil d'enregistrement et de reproduction optique selon la revendication 1, qui comprend en outre:
un moyen de détection de motif de fin (50) pour délivrer en sortie un signal de détection de motif de fin lorsque le motif de fin d'un secteur est détecté dans le signal de données délivré en sortie par ledit moyen de démodulation de données; et
un moyen de porte (34) sensible au signal de détection de motif de fin délivré en sortie par ledit moyen de détection de motif de fin, pour permettre la transmission dudit signal de minutage d'enregistrement.

3. Appareil d'enregistrement et de reproduction optique selon la revendication 2, qui comprend en outre un moyen (35, 36) pour générer une impulsion d'enregistrement pour commander un laser à semi-conducteur sur la base du signal de minutage d'enregistrement qui a traversé ledit moyen de porte (34), et un signal représentant les données à enregistrer.

4. Appareil d'enregistrement et de reproduction optique selon la revendication 2, dans lequel ledit moyen de génération de signal de minutage d'enregistrement (90) est sensible audit signal de détection de motif de fin, pour générer et délivrer en sortie des signaux de minutage d'enregistrement à des intervalles de temps constants.
